# EUROPEAN PATENT APPLICATION

(11) **EP 3 025 594 A1**
(43) Date of publication of application: **01.06.2016**
(21) Application number: 15196861.7
(22) Date of filing: 27.11.2015
(51) Int. Cl.: A23L 29/30, A23L 27/30, A23L 33/125, A23L 2/60

(54) **SWEETENER COMPOSITIONS COMPRISING STEVIOL GLYCOSIDES AND NON-STEVIOL SECONDARY SWEETENERS**

(30) Priority: 27.11.2014 US 201414555669; 27.11.2014 CA 2872990
(71) Applicant: GLG Life Tech Corporation, Vancouver, British Columbia V6E 3S7 (CA)
(72) Inventor: Zhang, Yong Luke, Vancouver, British Columbia V6E 3S7 (CA); Li, Cunbiao Kevin, Vancouver, British Columbia V6E 3S7 (CA)
(74) Representative: Moore, Michael Richard

(57) **Abstract**

A sweetener composition comprises Steviol Glycoside Reb A, Steviol Glycoside Reb C, Steviol Glycoside Reb D, and at least one other secondary non-Steviol sweetener, in which Reb A has a mass percentage content of from about 0.01 to about 30.0%, Reb C has a mass percentage content of from about 0.001 to about 10.0%, and Reb D has a mass percentage content of from about 0.001 to about 10.0%, and wherein secondary non-Steviol sweetener has a mass percentage content of from about 50.0 to about 99.99%.

## Description

### Field of the Invention

The present invention relates generally to natural sweetener compositions comprising plant glycosides.

### Background of the Invention

In the food and beverage industry, there is a general preference for the consumption of sweet foods, and manufacturers and consumers commonly add sugar in the form of sucrose (table sugar), fructose or glucose to beverages, food, etc. to increase the sweet quality of the beverage or food item. Although most consumers enjoy the taste of sugar, sucrose, fructose and glucose are high calorie sweeteners. Many alternatives to these high calorie sweeteners are artificial sweeteners or sugar substitutes, which can be added as an ingredient in various food items.

Common artificial sweeteners include saccharin, aspartame, and sucralose. Unfortunately, these artificial sweeteners have been associated with negative side effects. Therefore, alternative, natural non-caloric or low-caloric or reduced caloric sweeteners have been receiving increasing demand as alternatives to the artificial sweeteners and the high calorie sweeteners comprising sucrose, fructose and glucose. Like some of the artificial sweeteners, these alternatives provide a greater sweetening effect than comparable amounts of caloric sweeteners; thus, smaller amounts of these alternatives are required to achieve a sweetness comparable to that of sugar. These alternative, natural sweeteners, however, can be expensive to produce and/or possess taste characteristics different than sugar (such as sucrose), including, in some instances, undesirable taste characteristics such as sweetness linger, delayed sweetness onset, negative mouth feels and different taste profiles, such as off-tastes, including bitter, metallic, cooling, astringent, licorice-like tastes.

Steviol Glycosides are responsible for the sweet taste of the leaves of the stevia plant (Stevia rebaudiana Bertoni). These compounds range in sweetness from 40 to 300 times sweeter than sucrose. They are heat-stable, pH-stable, and do not ferment¹. They also do not induce a glycemic response when ingested, making them attractive as natural sweeteners to diabetics and others on carbohydrate-controlled diets.

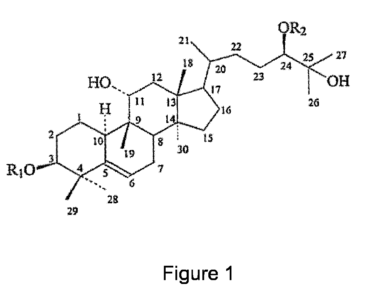

The chemical structures of the diterpene glycosides of Stevia rebaudiana Bertoni are presented in Figure. 1. The physical and sensory properties are well studied generally only for Stevioside (STV) and Rebaudioside A. The sweetness potency of Stevioside is around 210 times higher than sucrose, Rebaudioside A in between 200 and 400 times, and Rebaudioside C and Dulcoside A around 30 times. Rebaudioside A is considered to have most favorable sensory attributes of the four major Steviol Glycosides (see Table 1):

**TABLE**

| Name | Formula | T*_{Melp}* °C. | Mol. Weight | Optical rotation [α]²⁵*_{D}* (H₂O, 1%, w/v) | Solubility in water. % | Relative sweetness | Quality of taste |
|---|---|---|---|---|---|---|---|
| Steviol | C₂₀H₃₀O₃ | 212-213 | 318.45 | ND | ND | ND | Very bitter |
| Steviolmonoside | C₂₆H₄₀O₈ | ND | 480,58 | ND | ND | ND | ND |
| Stevioside | C₃₈H₆₀O₁₈ | 196-198 | 804.88 | -39.3 | 0.13 | 210 | Bitter |
| Rebaudioside A | C₄₀H₇₀O₂₃ | 242-244 | 967.01 | -20.8 | 0.80 | 200-400 | Less Bitter |
| Rebaudioside B | C₃₈H₆₀O₁₈, | 193-195 | 804.88 | -45.4 | 0.10 | 150 | Bitter |
| Rebaudioside C | C₄₄H₇₀O₂₂ | 213-217 | 951.01 | -29.9 | 0.21 | 30 | Bitter |
| Rebaudioside D | C₃₀H₈₀O₂₈ | 248-249 | 1129.15 | -29.5 (ethanol) | 1.00 | 220 | Like sucrose |
| Rebaudioside E | C₄₄H₇₀O₂₃ | 205-207 | 967.01 | -34.2 | 1.70 | 170 | Like sucrose |
| Rebaudioside F | C₄₃H₆₈O₂₂ | ND | 936.99 | -25.5 (methanol) | | ND | |
| Dulcoside A | C₃₈H₆₀O₁₇ | 193-195 | 788.87 | -50.2 | 0.58 | 30 | Very bitter |
| Steviolbioside | C₃₂H₅₀O₁₃ | 188-192 | 642.73 | -34.5 | 0.03 | 90 | Unpleasant |
| Rubusoside | C₃₂H₅₀O₁₃ | ND | 642.73 | 642.73 | ND | 110 | Very bitter |

¹ Brandle, Jim (2004-08-19). "FAQ-Stevia, Nature's Natural Low Calorie Sweetener". Agriculture and Agri-Food Canada. Retrieved 2006-11-08.

Stevia rebaudiana, after extraction and refinement is extensively used in the fields of foods, beverages, alcoholic liquor preparation, medicines, cosmetics, etc. In recent years, Stevia rebaudiana glycosides as extracts of Stevia rebaudiana have been used even more popularly as natural sweeteners and attractive alternatives to artificial sweeteners. They have become an excellent sweetening option since their caloric value is extremely low and they do not cause adverse effects to dental patients and diabetic patients. The potential market is huge.

A number of drug experiments show that the Steviol Glycosides are safe to eat and have no toxic and side effects and no carcinogenicity. In addition, is it recognized that regular consumption of Steviol Glycosides can prevent high blood pressure, diabetes, obesity, heart disease and other illnesses. Because of their incomparable superiority, Steviol Glycosides have become the substitute for the first generation source of sugar (sucrose) and the second-generation source of sweetener (artificial sweetener), and they have quickly gained a reputation as the third generation sweetener with both natural and healthy properties.

Stevia rebaudiana glycosides (note that the term is used interchangeably herein with *Steviol Glycosides*) mainly comprise the following nine components: Stevioside STV, rebaudioside A (RA), rubusoside, dulcoside A (DA), rebaudioside C (RC), rebaudioside F (RF), rebaudioside D (RD), steviolbioside (STB), and rebaudioside B (RB). RA is the commonly used Steviol Glycoside, which is the sweetest ingredient of the sweet Steviol Glycosides, (about 300 times sweeter than sucrose), however the extracted high-purity RA also has poor taste and a relatively heavy flavor of licorice, lingering bitterness and a sweet aftertaste, which affects the promotion, acceptance and use of Steviol Glycosides in foods and beverages.

The diterpene known as steviol is the aglycone of stevia's sweet glycosides, which are constructed by replacing steviol's carboxyl hydrogen atom with glucose to form an ester, and replacing the hydroxyl hydrogen with combinations of glucose and rhamnose to form an ether. The two primary compounds, stevioside and RA, use only glucose: Stevioside has two linked glucose molecules at the hydroxyl site, whereas RA has three, with the middle glucose of the triplet connected to the central steviol structure.

In terms of weight fraction, the four major Steviol Glycosides found in the stevia plant tissue are:
- 5-10% stevioside (STV) (250-300X of sugar)
- 2-12% RA-most sweet (350-450X of sugar) and least bitter
- 1-2% RC
- ½-1 % dulcoside A. (DA)

Rebaudioside B, D, E and steviolbioside (STB) are known to be present in minute quantities.

The tastes of these components are different from one another and can meet the demands of different consumer populations, for example, the consumers in the United States of America and Canada are fond of RA, whereas the consumers in Japan and Korea are fond of STV.

Currently, the marketed Stevia rebaudiana glycoside products are mainly RA and STV, and there are still no products *mainly containing* RC, therefore, the methods for extracting Stevia rebaudiana glycoside also mainly focus on the purification and refinement of RA and STV, to the exclusion of other glycosides.

There are some very compelling reasons *to customize the types and relative amounts of particular Steviol Glycosides in a sweetener composition* by maximizing extraction of one over the other or by simply mixing selected, previously extracted and purified Steviol Glycosides in selected, relative ranges.

Commercial preparations of Steviol Glycosides such as Stevia Extract and RA possess certain drawbacks substantially limiting their usage in mainstream products. One of these disadvantages is "so-called" *limited maximal response value.* This is the maximal sweetness in sugar equivalents achievable by using a high intensity sweetener regardless how high the concentration of the sweetener is. For Steviol Glycosides this value is approx. 6-8%. This means when used "as-is" Steviol Glycosides cannot deliver sweetness feeling which is higher than that of 6-8% sucrose solution. Considering that majority of soft drinks contain 10-13% sucrose the usage of Steviol Glycosides for full sugar substitution is not possible.

It has to be noted that high intensity sweeteners' taste profile is highly dependent on the concentration and usually the higher the concentration the higher the sensation of undesirable taste components such as bitterness, licorice, lingering aftertaste. This phenomenon limits the usage of Steviol Glycosides further to 4-5% sucrose equivalents in order to achieve pleasant taste of a food or beverage sweetened with stevia sweeteners. While in itself not a sweetener, RC has been trialed with nutritive sweeteners and shown to enable a 20 to 25 percent reduction in calories. In other words, RC delivers flavour and sweetness enhancing properties and amplifies the sweetening capability of other glycosides.

It is an object of the present invention to obviate or mitigate some of the above disadvantages.

### Summary of the Invention

It is an object of the present invention to provide a sweetener composition, comprising Steviol Glycosides, which is customized (as to exact components and their relative amounts) to achieve *maximal* sweetening capacity and *minimal* negative effects, including aftertaste and lingering bitterness.

It is an object of the invention to make this sweetener composition by maximizing extraction from source of desired Steviol Glycosides or by simply mixing selected, previously extracted and purified Steviol Glycosides in the desired, optimized and selected, relative concentration ranges as described and claimed herein.

In one aspect, the present invention provides a sweetener composition comprising Steviol Glycoside Reb A, Steviol Glycoside Reb C, Steviol Glycoside Reb D, and at least one other secondary non-Steviol sweetener, in which Reb A has a mass percentage content of from about 0.01 to about 30.0%, Reb C has a mass percentage content of from about 0.001 to about 10.0%, and Reb D has a mass percentage content of from about 0.001 to about 10.0%, and wherein secondary non-Steviol sweetener has a mass percentage content of from about 50.0 to about 99.99%.

The present invention further provides a sweetener composition comprising Steviol Glycoside Reb A, Steviol Glycoside Reb C, Steviol Glycoside Reb D, and *erythritol,* in which Reb A has a mass percentage content of from about 0.01 to about 30.0%, Reb C has a mass percentage content of from about 0.001 to about 10.0%, and Reb D has a mass percentage content of from about 0.001 to about 10.0%, and wherein erythritol has a mass percentage content of from about 50.0 to about 99.99% and wherein an optimal quality percentage of Reb A is from about 35.0 to about 99.0%, an optimal quality percentage content of Reb C is from about 50.0 to about 99.0% and an optimal quality percentage content of Reb D is from about 50.0 to about 99.0%.

The present invention further provides a sweetener composition comprising Steviol Glycoside Reb A, Steviol Glycoside Reb C, Steviol Glycoside Reb D, and *sucrose,* in which Reb A has a mass percentage content of from about 0.01 to about 30.0%, Reb C has a mass percentage content of from about 0.001 to about 10.0%, and Reb D has a mass percentage content of from about 0.001 to about 10.0%, and wherein sucrose has a mass percentage content of from about 50.0 to about 99.99% and wherein an optimal quality percentage of Reb A is from about 40.0 to about 99.0%, an optimal quality percentage content of Reb C is from about 60.0 to about 99.0% and an optimal quality percentage content of Reb D is from about 60.0 to about 99.0%.

These are zero-calorie sweetener products which can be formulated into zero-calorie or low-calorie products with round and full taste, similar to sucrose, and without negative aftertastes, the flavor of licorice and lingering bitterness. As such, these compositions can be widely used in a variety of foods and drinks.

The advantages of these compositions are significant.

### Brief Description of the Figures

Embodiments of the present invention will now be described, by way of example only, with reference to the attached Figures, wherein:
Figure 1 is a molecular structure of the triterpene backbone;
Figure 2 is the molecular structure of Mogroside II through IV side chains;
Figure 3 is the molecular structure of Mogroside V;
Figure 4 illustrates the chemical structure of RC and RA;
Figure 5 illustrates the chemical structure of RD; and
Figure 6 illustrates the chemical structure of erythritol;

### Detailed Description of the Invention

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

### Terms

The term "invention" and the like mean "the one or more inventions disclosed in this application", unless expressly specified otherwise.

The terms "an aspect", "an embodiment", "embodiment", "embodiments", "the embodiment", "the embodiments", "one or more embodiments", "some embodiments", "certain embodiments", "one embodiment", "another embodiment" and the like mean "one or more (but not all) embodiments of the disclosed invention(s)", unless expressly specified otherwise.

The term "variation" of an invention means an embodiment of the invention, unless expressly specified otherwise.

A reference to "another embodiment" or "another aspect" in describing an embodiment does not imply that the referenced embodiment is mutually exclusive with another embodiment (e.g., an embodiment described before the referenced embodiment), unless expressly specified otherwise.

The terms "including", "comprising" and variations thereof mean "including but not limited to", unless expressly specified otherwise.

The terms "a", "an" and "the" mean "one or more", unless expressly specified otherwise.

The term "plurality" means "two or more", unless expressly specified otherwise.

The term "herein" means "in the present application, including anything which may be incorporated by reference", unless expressly specified otherwise.

The term "whereby" is used herein only to precede a clause or other set of words that express only the intended result, objective or consequence of something that is previously and explicitly recited. Thus, when the term "whereby" is used in a claim, the clause or other words that the term "whereby" modifies do not establish specific further limitations of the claim or otherwise restricts the meaning or scope of the claim.

The term "e.g." and like terms mean "for example", and thus does not limit the term or phrase it explains. For example, in a sentence "the computer sends data (e.g., instructions, a data structure) over the Internet", the term "e.g." explains that "instructions" are an example of "data" that the computer may send over the Internet, and also explains that "a data structure" is an example of "data" that the computer may send over the Internet. However, both "instructions" and "a data structure" are merely examples of "data", and other things besides "instructions" and "a data structure" can be "data".

The term "respective" and like terms mean "taken individually". Thus if two or more things have "respective" characteristics, then each such thing has its own characteristic, and these characteristics can be different from each other but need not be. For example, the phrase "each of two machines has a respective function" means that the first such machine has a function and the second such machine has a function as well. The function of the first machine may or may not be the same as the function of the second machine.

The term "i.e." and like terms mean "that is", and thus limits the term or phrase it explains. For example, in the sentence "the computer sends data (i.e., instructions) over the Internet", the term "i.e." explains that "instructions" are the "data" that the computer sends over the Internet.

For clarity, it is to be noted that "Steviol Glycosides" have been referred to as stevia, stevioside, and stevia glycoside in the scientific literature. Generally, the term, Steviol Glycosides has been adopted for the family of steviol derivatives with sweetness properties that are derived from the stevia plant. More recently, the term, stevia, is used more narrowly to describe the plant or crude extracts of the plant, while stevioside is the common name for one of the specific glycosides that is extracted from stevia leaves. Stevioside is distinct from steviolbioside.

The term "process" may be used interchangeably with "method", as referring to the steps of purification described and claimed herein. The term Rebaudioside C may be used interchangeably with RC (or Reb C). This applies to all of the various Steviol Glycosides wherein full names or abbreviations may be used interchangeably..

As used herein, the term "about" in connection with a measured quantity, refers to the normal variations in that measured quantity, as expected by a skilled artisan making the measurement and exercising a level of care commensurate with the objective of measurement. Ranges in the present application refer to from about __to about Y. If such language is missing, that is the intended language and interpretation.

As used herein, the term dalton (Da or D) refers to an alternate name for the unified atomic mass unit (u or amu).

Any given numerical range shall include whole and fractions of numbers within the range. For example, the range "1 to 10" shall be interpreted to specifically include whole numbers between 1 and 10 (e.g., 1, 2, 3, 4,... 9) and non-whole numbers (e.g. 1.1, 1.2,... 1.9).

Where two or more terms or phrases are synonymous (e.g., because of an explicit statement that the terms or phrases are synonymous), instances of one such term/phrase does not mean instances of another such term/phrase must have a different meaning. For example, where a statement renders the meaning of "including" to be synonymous with "including but not limited to", the mere usage of the phrase "including but not limited to" does not mean that the term "including" means something other than "including but not limited to".

Neither the Title (set forth at the beginning of the first page of the present application) nor the Abstract (set forth at the end of the present application) is to be taken as limiting in any way as the scope of the disclosed invention(s). An Abstract has been included in this application merely because an Abstract of not more than 150 words is required under 37 C.F.R. Section 1.72(b). The title of the present application and headings of sections provided in the present application are for convenience only, and are not to be taken as limiting the disclosure in any way.

Numerous embodiments are described in the present application, and are presented for illustrative purposes only. The described embodiments are not, and are not intended to be, limiting in any sense. The presently disclosed invention(s) are widely applicable to numerous embodiments, as is readily apparent from the disclosure. One of ordinary skill in the art will recognize that the disclosed invention(s) may be practiced with various modifications and alterations, such as structural and logical modifications. Although particular features of the disclosed invention(s) may be described with reference to one or more particular embodiments and/or drawings, it should be understood that such features are not limited to usage in the one or more particular embodiments or drawings with reference to which they are described, unless expressly specified otherwise.

No embodiment of method steps or product elements described in the present application constitutes the invention claimed herein, or is essential to the invention claimed herein, or is coextensive with the invention claimed herein, except where it is either expressly stated to be so in this specification or expressly recited in a claim.

### Sweetener Composition

Within the scope of the invention, natural sweetener compositions are provided which:
1) have a taste profile comparable to sugar, with no negative after-taste;
2) is not prohibitively expensive to produce; and
3) can be easily added, for example, to beverages and food products to satisfy consumer demand for a sweet taste without the calories.

There is provided herein a process to select particular Steviol Glycosides in order to customize these sweetening goals.

The genus Stevia consists of about 240 species of plants native to South America, Central America, and Mexico, with several species found as far north as Arizona, New Mexico, and Texas. They were first researched by Spanish botanist and physician Petrus Jacobus Stevus (Pedro Jaime Esteve), from whose surname originates the Latinized word stevia.

Steviol glycosides have highly effective sweet taste properties. In fact, these compounds range in sweetness up to 380 times sweeter than sucrose. They are safe, non-toxic heat-stable, pH-stable, and do not ferment making them very commercially workable in the manufacture of foods and beverages. Furthermore, they do not induce a glycemic response when ingested (they have zero calories, zero carbohydrates and a zero glycemic index), making them extremely attractive as natural sweeteners to diabetics, those on carbohydrate-controlled diets and to anyone seeking healthy alternatives. The glycemic index, or GI, measures how fast a food will raise blood glucose level. Choosing foods that produce zero fluctuations in blood glucose is an important component for long-term health and reducing risk of heart disease and diabetes. As such, use of the natural sweetener compositions of the present invention has enormous advantages over cane, beet and other sugars.

During the extraction process, as increasing levels of purity of glycosides are produced, the costs associated with achieving such increasing levels of purity also increases. Those skilled in the art will understand that purifying steviol glycoside extracts to higher levels of purity, especially purity levels greater than 95%, can be very costly, which can be limiting on the use of these steviol glycosides in sweetener compositions. This is the problem addressed herein with respect to RC. It is possible to employ sweetening-type steviol glycosides, such as Reb A, at lower purities (and lower production costs), if pure and concentrated RC, prepared in accordance with the present invention is combined therewith as a sweetening "amplifier".

Typically, steviol glycosides are obtained by extracting leaves of Stevia rebaudiana Bertoni with hot water or alcohols (ethanol or methanol); the obtained extract is a dark particulate solution containing all the active principles plus leaf pigments, soluble polysaccharides, and other impurities. Some processes remove the "grease" from the leaves with solvents such as chloroform or hexane before extraction occurs. There are dozens of extraction patents for the isolation of steviol glycosides, such processes often being categorized the extraction patents into those based on solvent, solvent plus a decolorizing agent, adsorption and column chromatography, ion exchange resin, and selective precipitation of individual glycosides. Methods using ultrafiltration, metallic ions, supercritical fluid extraction with CO2 and extract clarification with zeolite are found within the body of more recent patents.

At the 68th Joint Expert Committee on Food Additives ("JECFA") meeting in 2007, steviol glycosides were defined as the products obtained from the leaves of Stevia rebaudiana Bertoni. As cited by JECFA, the typical manufacture starts with extracting leaves with hot water and the aqueous extract is passed through an adsorption resin to trap and concentrate the component steviol glycosides. The resin is washed with methanol to release the glycosides and the product is recrystallized with methanol. Ion-exchange resins may be used in the purification process. The final product is commonly spray-dried. Table 2 (at the conclusion of the disclosure) provides a product monograph of steviol glycosides, including chemical names, structures, methods of assay and sample chromatogram showing elution times of nine major glycosides

### Components of the Sweetener Composition

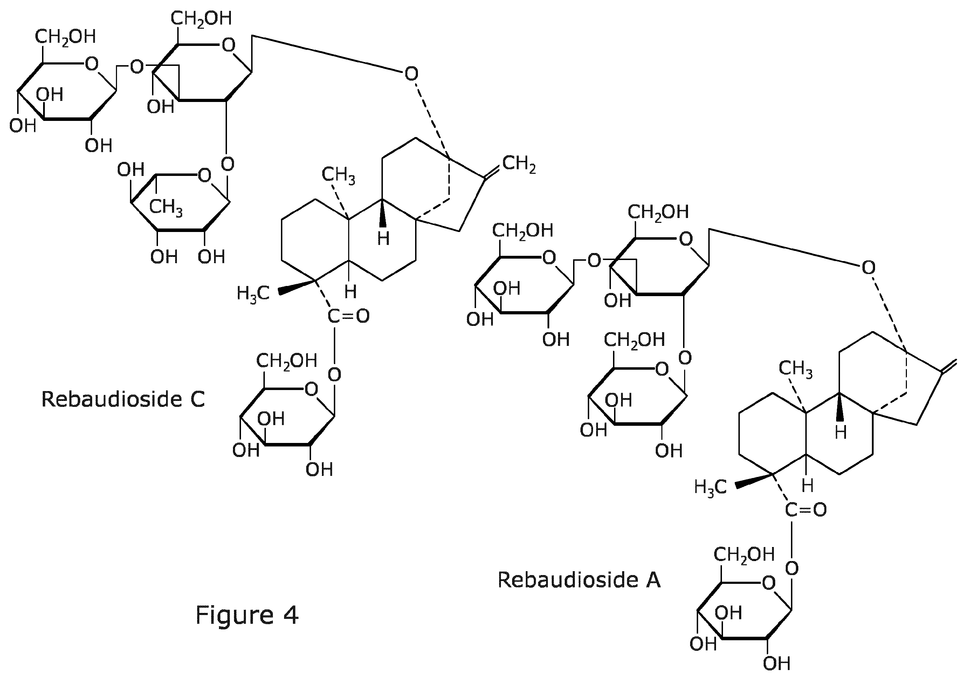

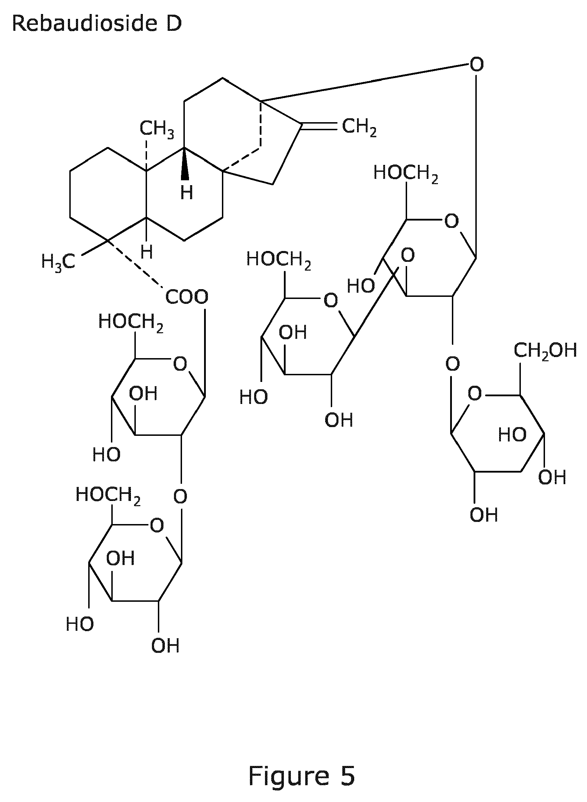

The composition of the invention comprise: Rebaudioside A (RA), chemical structure provided in Figure 4, Rebaudioside C (RC), chemical structure provided in Figure 4, Rebaudioside D (RD), chemical structure provided in Figure 5, in select, preferred relative mass ranges *and at least one* secondary non-Steviol sweetening component.

Selecting blending ratios of each component is important. RA is a common Steviol Glycoside, but as noted above, while the sweetest, it suffers from a lingering bitterness and has limited response value. RC is actually not a sweetening agent per se but acts as an amplifier for the remaining components.

RD has been investigated for many years and in some products it has been found to have lesser sweetening properties than RA and in other products, such a soft drinks, it has been found to have a higher sweetening potential, perhaps even higher than RA. As such, overall sweetening properties are inconsistent.

What has been found herein is that the combination, in selected ratios achieves the full sweetening potential while minimizing all deleterious taste and organoleptic effects.

Preferably, the composition comprises one or more secondary sweetening components as described herein.

### Secondary Sweetening Components:

Preferably, secondary sweetening component is selected from the group consisting of sucrose, erythritol, fructose, glucose, maltose, lactose, corn syrup (preferably high fructose), xylitol, sorbitol, or other sugar alcohols, inulin, miraculin, monetin, thaumatin, extracts of Mogroside V from the plant *Siraitia grosvenori* and combinations thereof, and also non-natural sweeteners such as aspartame, neotame, saccharin, sucralose, and combinations thereof, although such non-natural sweeteners are less preferred as compared to the natural sweeteners.

Within the scope of the invention, a natural sweetener composition can easily be added to food products and beverages, or can be used as a table top sweetener. The natural sweetener enhancer compositions may be used alone or in combination with other secondary sweeteners, as described herein, and/or with one or more organic and amino acids, flavours and/or coloring agents.

Most preferably the secondary non-Steviol sweetening component is either *erythritol* or *sucrose* or an extract of Mogroside V from the plant *Siraitia grosvenori* or any combination thereof.

### Erythritol

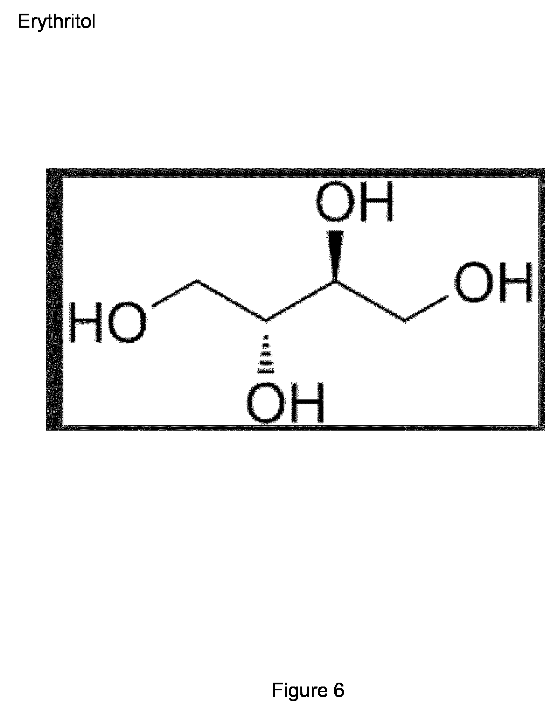

Erythritol ((2R,3S)-butane-1,2,3,4-tetraol), chemical structure provided in Figure 6, is a sugar alcohol (or polyol) that has been approved for use as a food additive in the United States and throughout much of the world. As compared to other sugar alcohols, erythritol appears quite different. To begin with, it contains much fewer calories:
- Table sugar: 4 calories per gram
- Xylitol: 2.4 calories per gram
- Erythritol: 0.24 calories per gram

With only 6% of the calories of sugar, it still has 70% of the sweetness. Due to its unique chemical structure, human bodies do not break it down and it travels largely unchanged through the digestive system, without causing any of the harmful metabolic effects of excess sugar or the digestive issues associated with other sugar alcohols. Despite long-term feeding of high amounts of erythritol, no negative effects have been discovered.²
² Regul Toxicol Pharmacol. 1996 Oct;24(2 Pt 2):S264-79

### Mogroside V

Luo Han Guo (luohanguo) refers to the fruit of Siraitia grosvenori, formerly called Momordica grosvenori, a member of the Curcubitaceae. The fruit is well-known for its sweet taste; this plant family (Gourd family) has other members that contain remarkable sweet components, including additional species of the genus Siraitia (e.g., S. siamensis, S. silomaradjae, S. sikkimensis, S. africana, S. borneensis, and S. taiwaniana) and the popular herb jiaogulan (Gynostemma pentaphyllum). The latter herb, which has both sweet and bitter tasting triterpene glycosides in its leaves, is now sold worldwide as a tea and made into an extract for use in numerous healthcare products. Luohanguo has been used as a medicinal herb for treating cough and sore throat and is popularly considered, in southern China, to be a longevity aid. These are the same uses as listed for jiaogulan. Luohanguo has more recently been developed into a non-caloric sweetener to compete with other herbal sweeteners such stevioside from the unrelated Stevia leaf.

Luohanguo is collected as a round green fruit that turns brown upon drying. The sweet taste of luohanguo comes primarily from mogrosides, a group of terpene glycosides, present at the level of about 1% of the fleshy part of the fruit. Both the fresh and dried fruits are extracted to yield a powder that is about 80% mogrosides. The mogrosides have been numbered, 1-5, and the main component is called mogroside-5, previously known as esgoside. Other, similar compounds from luohanguo have been labeled siamenoside and neomogroside. The mixed mogrosides are estimated to be about 300 times as sweet as sugar by weight, so that the 80% extracts are nearly 250 times sweeter than sugar; pure mogrosides 4 and 5 may be 400 times as sweet as sugar by weight.

The mogrosides are highly stable molecules based on a cucurbitane skeleton. As the name suggests, the cucurbitacins occur predominantly in the family Cucurbitaceae, and can be found in many groups of plants in the cucumber family, of which Luo Han is a member. Cucurbitacins are a group of secondary plant metabolites, classified chemically as triterpenes based on the 19-(10→9β)-abeo-10α-lanost-5-ene (cucurbitane) skeleton. All terpenoids are derived from repetitive fusion of branched 5-carbon isoprene units; the triterpenoids, which contain 30 carbon atoms, are generated by the head-to-head joining of two C₁₅ chains, each of which contains 3 isoprene units joined head to tail.

Mogrosides are formed of varying numbers of glucose units, from 2 to 6, attached to carbon 3 and carbon 24 (indicated as R₁ and R₂ in Figure 1) on the triterpene backbone.

All of the mogrosides are classified as triterpene glucosides, designated as the diglucoside, triglucoside, tetraglucoside, pentaglucoside and hexaglucoside. Mogrosides IV, V, and VI are very sweet and are responsible for the sweetness of Luo Han fruit and consequently that of the PureLo® concentrate of Luo Han fruit. Mogroside V is the major sweetness component of the fruit, comprising up to 0.5% of the dried fruit weight. The inherent robust stability of the coordinate covalent bonds between the triterpene framework and carbohydrate residues attached at carbons 3 and 24 render the mogrosides inert to thermal and enzymatic degradation. Thus mogrosides are biochemically stable, non-nutritive, and non-hygroscopic¹

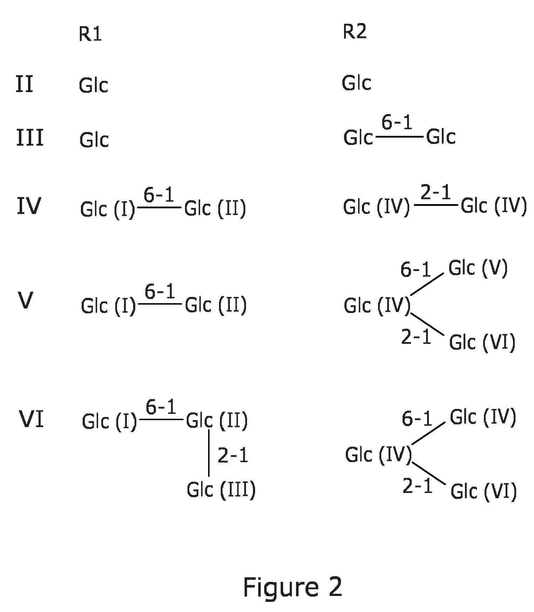

The simplest mogroside, mogroside II, has one glucose residue attached to each of carbons 3 and 24. Mogroside III differs in having an additional glucose residue chained to carbon 24, while mogroside IV has 2-unit glucose side chains at both carbon 3 and 24. This progression continues through mogroside VI, which has 3 glucose residues attached at each of the two carbons at locations 3 and 24 of the triterpene backbone. This is illustrated below in Figure 2.

The molecular formula of mogroside V is C₆₀H₁₀₂O₂₉; its molecular weight is 1286 Dalton (Da). The molecular formulas of the other mogrosides are as follows:
mogroside II**:** C₄₂H₇₂O₁₄
mogroside III: C₄₈H₈₂O₁₉
mogroside IV: C₅₄H₉₂O₂₄
mogroside VI: C₆₆H₁₁₂O₃₄

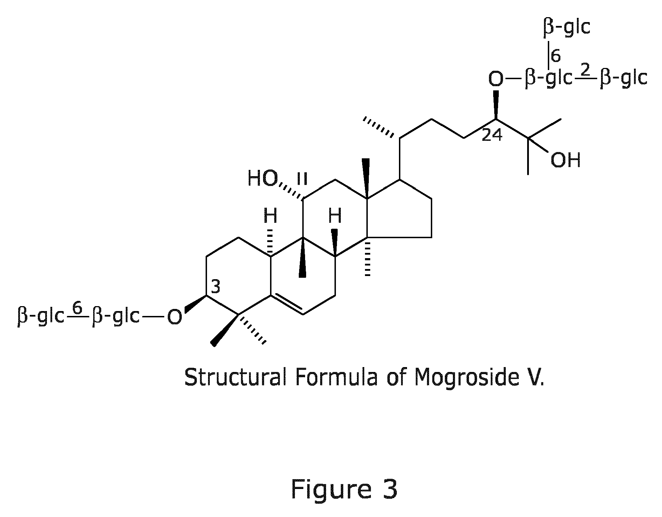

The structural formula of mogroside V is shown in Figure 3.

The term Mogroside V may be used interchangeably with esgoside and has the chemical structure as noted herein.

Typically, Mogroside V is the most abundant single Mogroside component of Luo Han Guo extracts, accompanied by other Mogrosides such as Mogrosides I, II, III, IV and VI as well as other extracted materials, such as polyphenols, flavonoids, melanoidins, terpenes, proteins, sugars, aromatic glycosides, and semi-volatile organic compounds. In some embodiments of the invention, the Mogroside V is provided in the form of a Luo Han Guo extract (purified and concentrated to increase Mogroside V content).

### Preferred Ranges

### Mass percentages and Quality percentages:

The present invention provides a sweetener composition comprising Steviol Glycoside Reb A, Steviol Glycoside Reb C, Steviol Glycoside Reb D, and at least one other secondary non-Steviol sweetener, in which Reb A has a mass percentage content of from about 0.01 to about 30.0%, Reb C has a mass percentage content of from about 0.001 to about 10.0%, and Reb D has a mass percentage content of from about 0.001 to about 10.0%, and wherein secondary non-Steviol sweetener has a mass percentage content of from about 50.0 to about 99.99%.

Preferably, an optimal *quality percentage* of Reb A is from about 35.0 to about 99.0%, an optimal quality percentage content of Reb C is from about 50.0 to about 99.0% and an optimal quality percentage content of Reb D is from about 50.0 to about 99.0%.

More preferably, in one embodiment of the composition, the formulated relative ratio is as follows: the optimal *mass percentage* content of Reb A is from about 0.01 to about 20.0%, the optimal mass percentage content of Reb C is from about 0.001 to about 7.0%, the optimal mass percentage content of Reb D if from about 0.001 to about 8.0% and the optimal mass percentage content of secondary non-Steviol sweetener is from about 65.0 to about 99.99%.

Preferably, an optimal *quality percentage* of Reb A is from about 60.0 to about 99.0%; an optimal quality percentage of Reb C is from about 75.0 to about 99.0% and an optimal quality percentage of Reb D is from about 75.0 to about 99.0%.

Another preferred formulated ratio: Reb A has the mass percentage content of from about 0.01 to about 10.0%, Reb C has the mass percentage content of from about 0.001 to about 5.0%, Reb D has the mass percentage content of from about 0.001 to about 5.0% and the secondary non-Steviol sweetener (preferably erythritol) has the mass percentage content of from about 80.0 to about 99.99%; and wherein the optimal quality percentage of Reb A is 60.0∼99.0%; the optimal quality percentage of Reb C is 80.0∼99.0% and the optimal quality percentage of Reb D is 75.0∼99.0%.

### Comments on Mass percentage vs. Quality percentage:

With the scope of the invention, it is important to understand the difference between "quality percentage" and "mass percentage". As used herein, "quality percentage" refers to the quality of Reb A, Reb C and/or Reb D in a particular composition/blend, and not the relative amount. For example, selecting Reb A 60 (60%) in a composition/blend - means that it is a steviol glycoside comprising 60% Reb A. The composition of the invention comprises a part of that "mass percentage". So, "mass percentage" refers to the relative percentage in a blend. For example, and for greater clarity, when it is provided that the composition so of invention comprises 5% of Reb A 60, this means that there is a *mass percentage* of Reb A at 5%, but the *quality percentage* of that RA is 60%.

Within these above mass percentages and optimal quality percentages, it is preferred that the secondary non-Steviol sweetener is one of erythritol, sucrose or Mogroside V from the plant *Siraitia grosvenori*.

In another aspect of the invention, there is provided a sweetener composition comprising Steviol Glycoside Reb A, Steviol Glycoside Reb C, Steviol Glycoside Reb D, and wherein secondary non-Steviol sweetener is sucrose, in which Reb A has a mass percentage content of from about 0.01 to about 30.0%, Reb C has a mass percentage content of from about 0.001 to about 10.0%, and Reb D has a mass percentage content of from about 0.001 to about 10.0%, and wherein sucrose has a mass percentage content of from about 50.0 to about 99.99% and wherein an optimal quality percentage of Reb A is from about 40.0 to about 99.0%, an optimal quality percentage content of Reb C is from about 60.0 to about 99.0% and an optimal quality percentage content of Reb D is from about 60.0 to about 99.0%.

Another preferred ratio: Reb A has the mass percentage content of from about 0.01 to about 20.0%, Reb C has the mass percentage content of from about 0.001 to about 9.0%, Reb D has the mass percentage content of from about 0.001 to about 6.0% and sucrose has the mass percentage content of from about 65.0 to about 99.99%; wherein an optimal quality percentage of Reb A is from about 40.0 to 99.0%; an optimal quality percentage of Reb C is from about 60.0 to about 99.0% and an optimal quality percentage of Reb D is from about 60.0 to about 99.0%.

Another preferred ratio: Reb A has the mass percentage content of from about 0.01 to about 5.0%, Reb C has the mass percentage content of from about 0.001 to about 1.0%, Reb D has the mass percentage content of from about 0.001 to about 1.0% and sucrose has the mass percentage content of from about 93.0 to about 99.99%; wherein the an optimal quality percentage of Reb A is from about 60.0 to about 99.0%; an optimal quality percentage of Reb C is from about 80.0 to about 99.0% and an optimal quality percentage of Reb D is from about 75.0 to about 99.0%.

Compared with the existing technologies, this invention formulated with the sweetest ingredients, i.e. RA, and the sweetness enhancer without sweetness, i.e. RC, and other sweet raw materials to increase the product's sweetness, in addition, RD is a kind of Steviol Glycoside with taste different from Reb A, Reb C and other Steviol Glycosides, which tastes round and full, similar to sucrose, and has no sweet aftertaste, flavor of licorice and lingering bitterness, extremely suitable for formulating with Reb A and Reb C to effectively make up the deficiency of Steviol Glycosides in taste and to meet the needs of sweetness.

### Uses of the Sweetener Compositions

In one aspect, the sweetener compositions of the present invention may be used in the preparation of various food products, beverages, medicinal formulations, chemical industrial products, among others. Exemplary applications/uses for the sweetener compositions include, but are not limited to: (a) food products, including canned food, preserved fruits, pre-prepared foods, soups, (b) beverages, including coffee, cocoa, juice, carbonated drinks, sour milk beverages, yogurt beverages, meal replacement beverages, and alcoholic drinks, such as brandy, whisky, vodka and wine; (c) grain-based goods--for example, bread and pastas, cookies, pastries, whether these goods are cooked, baked or otherwise processed; (d) fat-based products--such as margarines, spreads (dairy and non-dairy), peanut butter, peanut spreads, and mayonnaise; (d) Confectioneries--such as chocolate, candies, toffee, chewing gum, desserts, non-dairy toppings (for example Cool Whip®), sorbets, dairy and non-dairy shakes, icings and other fillings, (e) drug and medicinal formulations, particularly in coatings and flavourings; (f) cosmetics and health applications, such as for sweetening toothpaste; and (g) seasonings for various food products, such as soy sauce, soy sauce powder, soy paste, soy paste powder, catsup, marinade, steak sauce, dressings, mayonnaise, vinegar, powdered vinegar, frozen-desserts, meat products, fish-meat products, potato salad, bottled and canned foods, fruit and vegetables.

The natural sweetener compositions of the present invention may be formulated into premixes and sachets. Such premixes may then be added to a wide variety of foods, beverages and nutraceuticals. The purified natural sweetener compositions may, in one preferred form, be table top sweeteners.

Formulating the mixture of Reb A, Reb C and Reb D with erythritol or sucrose respectively offers a zero-calorie or low-calorie sweet product that can be widely used in a variety of foods and drinks, for example: baked goods, jams, pickles, carbonated drinks and fruit drinks, etc., and it may also determine use of zero-calorie or low-calorie sweetener according to the characteristics of the target product.

The following examples illustrate preferred embodiments of the present invention.

### EXAMPLES

**EXAMPLE 1**: Zero-calorie sweetener formulating ratio: Reb A (0.01∼10.0) %, Reb C (0.001∼5.0)%, Reb D (0.001∼5.0)%, erythritol (80.0∼99.99)%; wherein the mass percentage content of Reb A is 60.0∼99.0%, the mass percentage content of Reb C is 80.0∼99.0%, and the mass percentage content of Reb D is 75.0∼99.0%.
**Embodiment 1**

| Steviol Glycosides | RA85 | RC85 | RD90 | Erythritol | Formulating Effect |
|---|---|---|---|---|---|
| (%) | 5.0 | 0.02 | 0.5 | 94.48 | Equivalent to 10 times that of sucrose, almost no calories, sweet and mellow taste close to sucrose |

Performance parameters:

| | Sweetness factor | (kj/g) |
|---|---|---|
| | | Energy value (kj/g) |
| Sucrose | 1.0 | 16.67 |
| Crystalline Fructose | 1.5 | 15.5 |
| Glucose | 0.67 | 17.1 |
| Maltose | 0.4 | 13.84 |
| High-fructose corn syrup | 1.0 | 16.67 |
| Zero-calorie sweetener | 10.0 | 1.57 |

**Embodiment 2**

| Steviol Glycoside | RA97 | RC85 | RD95 | Erythritol | Formulating Effect |
|---|---|---|---|---|---|
| (%) | 0.5 | 0.05 | 0.05 | 99.4 | Equivalent to 2 times that of sucrose, almost no calories, sweet and mellow taste close to sucrose. |

Performance parameters:

| | Sweetness factor | (kj/g) |
|---|---|---|
| | | Energy value (kj/g) |
| Sucrose | 1.0 | 16.67 |
| Crystalline Fructose | 1.5 | 15.5 |
| Glucose | 0.67 | 17.1 |
| Maltose | 0.4 | 13.84 |
| High-fructose corn syrup | 1.0 | 16.67 |
| Zero-calorie sweetener | 2.0 | 1.66 |

**Embodiment 3**

| Steviol Glycoside | RA90 | RC85 | RD90 | Erythritol | Formulating Effect |
|---|---|---|---|---|---|
| (%) | 0.5 | 0.05 | 0.05 | 99.4 | Equivalent to 1.5 times that of sucrose, almost no calories, sweet and mellow taste close to sucrose. |

Performance parameters:

| | Sweetness factor | (kj/g) |
|---|---|---|
| | | Energy value (kj/g) |
| Sucrose | 1.0 | 16.67 |
| Crystalline Fructose | 1.5 | 15.5 |
| Glucose | 0.67 | 17.1 |
| Maltose | 0.4 | 13.84 |
| High-fructose corn syrup | 1.0 | 16.67 |
| Zero-calorie sweetener | 1.5 | 1.66 |

**Embodiment 4**

| Steviol Glycoside | RA95 | RC80 | RD90 | Erythritol | Formulating Effect |
|---|---|---|---|---|---|
| (%) | 0.5 | 0.05 | 0.05 | 99.4 | Equivalent to 2 times that of sucrose, almost no calories, sweet and mellow taste close to sucrose. |

Performance parameters:

| | Sweetness factor | (kj /g) |
|---|---|---|
| | | Energy value (kj/g) |
| Sucrose | 1.0 | 16.67 |
| Crystalline Fructose | 1.5 | 15.5 |
| Glucose | 0.67 | 17.1 |
| Maltose | 0.4 | 13.84 |
| High-fructose corn syrup | 1.0 | 16.67 |
| Zero-calorie sweetener | 2.0 | 1.66 |

**EXAMPLE 2:** Low-calorie sweetener formulating ratio: Reb A (0.01∼5.0) %, Reb C (0.001∼1.0)%, Reb D (0.001∼1.0)%, sucrose (93.0∼99.99)%, wherein the mass percentage content of Reb A is 60.0∼99.0%; the mass percentage content of Reb C is 80.0∼99.0%; the mass percentage content of Reb D is 75.0∼99.0%.

**Embodiment 1**

| Steviol Glycoside | RA97 | RC85 | RD95 | Sucrose | Formulating Effect |
|---|---|---|---|---|---|
| % | 0.5 | 0.01 | 0.052 | 99.438 | Equivalent to 2.5 times that of sucrose, 60% reduction in calories at the same sweetness, sweet and mellow taste close to sucrose. |

Performance parameters:

| | Sweetness factor | (kj/g) |
|---|---|---|
| | | Energy value (kj/g) |
| Sucrose | 1.0 | 16.67 |
| Crystalline Fructose | 1.5 | 15.5 |
| Glucose | 0.67 | 17.1 |
| Maltose | 0.4 | 13.84 |
| High-fructose corn syrup | 1.0 | 16.67 |
| Low-calorie sweetener | 2.5 | 16.58, 60% reduction in calories at the same sweetness |

**Embodiment 2**

| Steviol Glycoside | RA95 | RC80 | RD95 | Sucrose | Formulating Effect |
|---|---|---|---|---|---|
| % | 0.35 | 0.01 | 0.1 | 99.54 | Equivalent to 2 times that of sucrose, 50% reduction in calories at the same sweetness, sweet and mellow taste close to sucrose. |

Performance parameters:

| | Sweetness factor | (kj/g) |
|---|---|---|
| | | Energy value (kj/g) |
| Sucrose | 1.0 | 16.67 |
| Crystalline Fructose | 1.5 | 15.5 |
| Glucose | 0.67 | 17.1 |
| Maltose | 0.4 | 13.84 |
| High-fructose corn syrup | 1.0 | 16.67 |
| Low-calorie sweetener | 2.0 | 16.59, 50% reduction in calories at the same sweetness |

**Embodiment 3**

| Steviol Glycoside | RA90 | RC80 | RD90 | Sucrose | Formulating Effect |
|---|---|---|---|---|---|
| % | 1.0 | 0.02 | 0.25 | 98.73 | Equivalent to 4 times that of sucrose, on 25% calories of sucrose. at the same sweetness, taste relatively close to sucrose. |

Performance parameters:

| | Sweetness factor | (kj/g) |
|---|---|---|
| | | Energy value (kj/g) |
| Sucrose | 1.0 | 16.67 |
| Crystalline Fructose | 1.5 | 15.5 |
| Glucose | 0.67 | 17.1 |
| Maltose | 0.4 | 13.84 |
| High-fructose corn syrup | 1.0 | 16.67 |
| Low-calorie sweetener | 4.0 | 16.46, 25% reduction in calories at the same sweetness |

**Embodiment 4**

| Steviol Glycoside | RA85 | RC85 | RD90 | Sucrose | Formulating Effect |
|---|---|---|---|---|---|
| | 5.0 | 0.02 | 0.5 | 94.48 | Equivalent to 10 times that of sucrose, only 10% calories of white sugar, sweet and mellow taste close to sucrose. |

Performance parameters:

| | Sweetness factor | (kj/g) |
|---|---|---|
| | | Energy value (kj/g) |
| Sucrose | 1.0 | 16.67 |
| Crystalline Fructose | 1.5 | 15.5 |
| Glucose | 0.67 | 17.1 |
| Maltose | 0.4 | 13.84 |
| High-fructose corn syrup | 1.0 | 16.67 |
| Low-calorie sweetener | 10.0 | 16.46, only 10% calories of sucrose at the same sweetness |

The above-described embodiments are only the preferred ones of this invention, and are not intended to limit this invention, any modification, equivalent replacement or improvement, etc. of which within the spirit and principles of this invention should be included in the protection of this invention.

## Claims

1. A sweetener composition comprising: Steviol Glycoside Reb A, Steviol Glycoside Reb C, Steviol Glycoside Reb D, and at least one other secondary non-Steviol sweetener, in which Reb A has a mass percentage content of from about 0.01 to about 30.0%, Reb C has a mass percentage content of from about 0.001 to about 10.0%, and Reb D has a mass percentage content of from about 0.001 to about 10.0%, and wherein secondary non-Steviol sweetener has a mass percentage content of from about 50.0 to about 99.99%.

2. The composition of claim 1, wherein an optimal quality percentage of Reb A is from about 35.0 to about 99.0%, an optimal quality percentage content of Reb C is from about 50.0 to about 99.0% and an optimal quality percentage content of Reb D is from about 50.0 to about 99.0%.

3. The composition of claim 1 or claim 2, wherein the mass percentage content of Reb A is from about 0.01 to about 20.0%, the optimal mass percentage content of Reb C is from about 0.001 to about 7.0%, the optimal mass percentage content of Reb D is from about 0.001 to about 8.0% and the mass percentage content of secondary non-Steviol sweetener is from about 65.0 to about 99.99%.

4. The composition of claim 3, wherein an optimal quality percentage of Reb A is from about 60.0 to about 99.0%; an optimal quality percentage of Reb C is from about 75.0 to about 99.0% and an optimal quality percentage of Reb D is from about 75.0 to about 99.0%.

5. The composition of any preceding claim, wherein the mass percentage content of Reb A is from about 0.01 to about 10.0%, the mass percentage content of Reb C is from about 0.001 to about 5.0%, the mass percentage content of Reb D is from about 0.001 to about 5.0% and the mass percentage content of the secondary non-Steviol sweetener is from about 80.0 to about 99.99%.

6. The composition of claim 5, wherein an optimal quality percentage of Reb A is 60.0∼99.0%; an optimal quality percentage of Reb C is 80.0∼99.0% and an optimal quality percentage of Reb D is 75.0∼99.0%.

7. The composition of any preceding claim, wherein the secondary non-Steviol sweetener is selected from the group consisting of sucrose, erythritol, fructose, glucose, maltose, lactose, corn syrup (preferably high fructose), xylitol, sorbitol, or other sugar alcohols, inulin, miraculin, monetin, thaumatin, and extracts comprising Mogroside V, and combinations thereof.

8. The composition of any preceding claim, wherein the secondary non-Steviol sweetener is erythritol.

9. A sweetener composition comprising: Steviol Glycoside Reb A, Steviol Glycoside Reb C, Steviol Glycoside Reb D, and sucrose, in which Reb A has a mass percentage content of from about 0.01 to about 30.0%, Reb C has a mass percentage content of from about 0.001 to about 10.0%, and Reb D has a mass percentage content of from about 0.001 to about 10.0%, and wherein sucrose has a mass percentage content of from about 50.0 to about 99.99%; and wherein an optimal quality percentage of Reb A is from about 40.0 to about 99.0%, an optimal quality percentage content of Reb C is from about 60.0 to about 99.0% and an optimal quality percentage content of Reb D is from about 60.0 to about 99.0%.

10. The composition of claim 9, wherein Reb A has the mass percentage content of from about 0.01 to about 20.0%, Reb C has the mass percentage content of from about 0.001 to about 9.0%, Reb D has the mass percentage content of from about 0.001 to about 6.0% and sucrose has the mass percentage content of from about 65.0 to about 99.99%; wherein an optimal quality percentage of Reb A is from about 40.0 to 99.0%; an optimal quality percentage of Reb C is from about 60.0 to about 99.0% and an optimal quality percentage of Reb D is from about 60.0 to about 99.0%.

11. The composition of claim 9 or claim 10, wherein Reb A has the mass percentage content of from about 0.01 to about 5.0%, Reb C has the mass percentage content of from about 0.001 to about 1.0%, Reb D has the mass percentage content of from about 0.001 to about 1.0% and sucrose has the mass percentage content of from about 93.0 to about 99.99%; wherein the an optimal quality percentage of Reb A is from about 60.0 to about 99.0%; an optimal quality percentage of Reb C is from about 80.0 to about 99.0% and an optimal quality percentage of Reb D is from about 75.0 to about 99.0%.
